# EUROPEAN PATENT APPLICATION

(11) **EP 4 458 449 A1**
(43) Date of publication of application: **06.11.2024**
(21) Application number: 24174140.4
(22) Date of filing: 03.05.2024
(51) Int. Cl.: B01D 45/06, B01D 45/16, B01D 45/18

(54) **HYBRID CONSTRUCTION OF AIRCRAFT WATER COLLECTOR**

(30) Priority: 04.05.2023 US 202318143248
(71) Applicant: Hamilton Sundstrand Corporation, Charlotte, NC 28217-4578 (US)
(72) Inventor: SONG, Shunjun, Farmington 06032 (US); WALSH, Kevin P., Enfield, CT 06082 (US); PEKALA, Walter S., Ellington, CT 06029 (US)
(74) Representative: Dehns

(57) **Abstract**

A water collector includes a metallic center body (14), an outer guide (20) disposed concentrically within the metallic center body, a mid guide (22) disposed concentrically within the outer guide, and an inner guide (24) disposed concentrically within the mid guide. The outer guide, the mid guide, and the inner guide are formed from a non-metallic material.

## Description

### BACKGROUND

The present disclosure relates generally to water collectors, and more particularly to water collectors for use in aircraft air conditioning systems.

In aircraft air conditioning systems, moisture must be collected and drained from engine bleed air, or compressed ambient air, at a location downstream of a condenser to prevent re-entry into the cabin or air cycle machine where the moisture may cause damage. Existing air conditioning systems rely on forcing water particles into an inner diameter of a duct and into a scavenge flow area where the velocity of the water is decreased due to an increasing flow area of the scavenge flow area. Existing water collectors are typically formed from aluminum, and the constituent components joined via dip brazing. Dip brazing can, however, be detrimental due to the high process temperature and toxic elements within the flux material. Wholly composite water collectors are known but are limited to lower pressure applications. Thus, alternative materials and/or manufacturing processes for water collectors are desirable.

### SUMMARY

A water collector includes a metallic center body, an outer guide disposed concentrically within the metallic center body, a mid guide disposed concentrically within the outer guide, and an inner guide disposed concentrically within the mid guide. The outer guide, the mid guide, and the inner guide are formed from a non-metallic material.

A method of making a water collector includes forming a first half and a second half of a metallic center body, forming from a first non-metallic material, an inner guide, a mid guide, and an outer guide, disposing the outer guide, the mid guide, and the inner guide concentrically inward, respectively, of the first half of the metallic center body, and joining and fluidly sealing the second half to the first half.

### BRIEF DESCRIPTION OF THE DRAWINGS

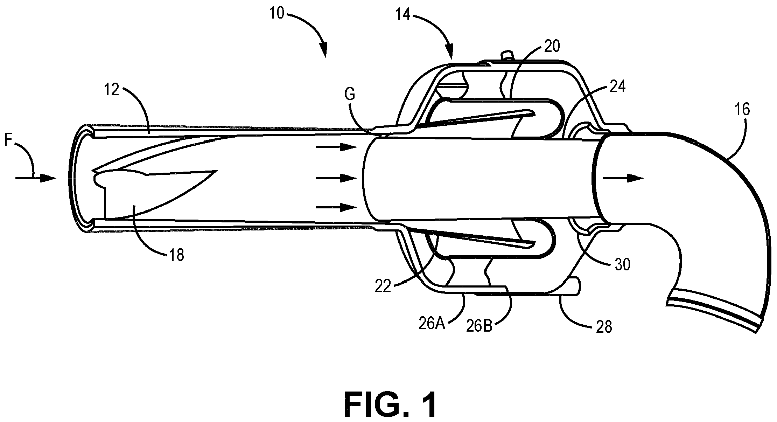

FIG. 1 is a cross-sectional illustration of a hybrid water collector.

While the above-identified figure sets forth an embodiment of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined by the claims. The figures may not be drawn to scale, and applications and embodiments of the present invention may include features, steps and/or components not specifically shown in the drawings.

### DETAILED DESCRIPTION

This disclosure presents a hybrid water collector constructed from both metallic and non-metallic components. More specifically, ducting and internal guide components can be formed from non-metallic materials, while the larger center body can be formed from aluminum. The hybrid construction is robust enough for mid to high-pressure applications, and does not require dip brazing for assembly. The elevated temperatures required for dip brazing can often cause defects in metallic components, and the process carries a risk of caustic fume emissions and fire/explosion.

FIG. 1 is a cross-sectional illustration of water collector 10 for receiving and removing moisture from airflow F from an upstream component of an air conditioning system (ACS), such as a condenser, which condenses moisture from aircraft engine bleed air into droplets. Water collector 10 includes inlet duct 12, center body (i.e., "can") 14 downstream of inlet duct 12, and outlet duct 16 downstream of center body 14. Swirl vanes 18 are disposed within inlet duct 12. Radially inward from center body 14 are outer guide 20, mid guide 22, and inner guide 24. Center body 14 can be formed from two halves 26 (i.e., upstream half 26A and downstream half 26B), one of which includes drainage port 28 situated at a radially outer extent of center body 14. Diffuser 30 is disposed concentrically around inner guide 24 proximate outlet duct 16.

Inner guide 24 is a substantially cylindrical guide structure extending along the primary flow direction from upstream to downstream, between inlet duct 12 and outlet duct 16. Mid guide 22 is a radially expanding (i.e., in the downstream direction) guide structure circumferentially disposed about inner guide 24. Mid guide 22 directs moisture laden air into outer guide 20. Outer guide 20 circumferentially disposed about inner guide 24 and mid guide 22. Mid guide 22 and outer guide 20 form a somewhat tortuous flow path for airflow and moisture traveling generally within center body 14.

In operation of the encompassing air conditioning system, airflow F enters inlet duct 12, and swirl vanes 18 impart a swirl to airflow F to cast any droplets of moisture radially outward. As airflow F continues through water collector 10, the moisture laden portions of airflow F, which have been forced centrifugally radially outward, travel through circumferential gap G between inlet duct 12 and inner guide 24 to reach mid guide 22, then to outer guide 20. Droplets separated from airflow F collect at the gravitational bottom of center body 14 where they can exit water collector 10 via drainage port 28. Diffuser 30 can guide previously moisture laden portions of airflow F from center body 14 to outlet duct 16 while catching droplets not already collected. Relatively dry airflow F can travel from outlet duct 16 to, for example, an air cycle machine.

Non-metallic components (i.e., all but center body 14) can generally be formed from molded and/or printed materials. More specifically, inlet duct 12, outlet duct 16, and swirl vanes 18 can be a composite, such as a carbon fiber polyether ether ketone (PEEK) in one example. Outer guide 20, mid guide 22, and inner guide 24 can be formed from a polymer material, such as Ryton^{®} in one example. Diffuser 30 can be formed from PEEK. Each of the foregoing components can be formed using a suitable molding process, such as injection molding or compression molding. These components can alternatively be additively manufactured. Such processes produce high quality, reproducible components with fewer defects than other processes and/or materials, forming components with relatively tight tolerances. This can be important with respect to water collector 10, where moisture needs to be directed toward center body 14 through small gaps between inlet duct 12 and inner guide 24, for example. Center body 14 can be a hydroformed aluminum in one example. Given the relatively large area of center body 14 compared to the various non-metallic components, a material like aluminum is suitably strong for the operating environment of water collector 10, which can experience pressures ranging from 15 PSIG (103.4 kPa) to 100 PSIG (689.5 kPa), and temperatures at or in excess of 400°F (204.4°C).

The non-metallic components of water collector 10 can be assembled and joined via adhesive bonding in one example. Center body 14 can further be adhesively bonded (and fluidly sealed) to inlet duct 12 and outlet duct 16. One half 26 of center body 14 can be assembled onto the respective adjacent duct (i.e., inlet duct 12 or outlet duct 16), then the various guides (i.e., inner guide 24, mid guide 22, and/or outer guide 20) assembled and bonded together prior to placing the remaining half 26 of center body 14 into place. This can allow for inspection of the proper assembly of the guides before sealing them within center body 14. The two halves 26 of center body can be joined (and fluidly sealed) together using a bonding or welding process. Any desired external components can be welded onto center body 14.

While the invention has been described with reference to an exemplary embodiment(s), it will be understood by those skilled in the art that various changes may be made without departing from the scope of the invention as defined by the claims. In addition, many modifications may be made to adapt a particular situation or material to the teachings of the invention without departing from the scope of the claims. Therefore, it is intended that the invention not be limited to the particular embodiment(s) disclosed, but that the invention will include all embodiments falling within the scope of the appended claims.

## Claims

1. A water collector comprising:
a metallic center body (14);
an outer guide (20) disposed concentrically within the metallic center body;
a mid guide (22) disposed concentrically within the outer guide; and
an inner guide (24) disposed concentrically within the mid guide,
wherein the outer guide, the mid guide, and the inner guide are formed from a non-metallic material.

2. The water collector of claim 1, wherein the metallic center body (14) is formed from aluminum.

3. The water collector of claim 2, wherein the non-metallic material is a polymer.

4. The water collector of any preceding claim, further comprising: an inlet duct (12) upstream of and joined to the center body.

5. The water collector of claim 4 and further comprising: a plurality of swirl vanes (18) disposed within the inlet duct.

6. The water collector of claim 5 and further comprising: an outlet duct (16) downstream of and joined to the center body.

7. The water collector of claim 6, wherein each of the inlet duct (12), the plurality of swirl vanes (18), and the outlet duct (16) are formed from a composite material, and optionally wherein the composite material is polyether ether ketone.

8. The water collector of any preceding claim, wherein the metallic center body comprises a fluid drainage port (28).

9. The water collector of any preceding claim and further comprising: a non-metallic diffuser (30) disposed concentrically around the inner guide.

10. A method of making a water collector, the method comprising:
forming a first half and a second half of a metallic center body (14);
forming from a first non-metallic material, an inner guide (24), a mid guide (22), and an outer guide (20);
disposing the outer guide, the mid guide, and the inner guide concentrically inward, respectively, of the first half of the metallic center body; and
joining and fluidly sealing the second half to the first half.

11. The method of claim 10, wherein the second half is adhesively bonded or welded to the first half.

12. The method of claim 10 or 11, wherein the metallic center body is formed using a hydroforming process and/or wherein the metallic center body is formed from aluminum.

13. The method of claim 12, wherein the first non-metallic material is formed from a polymer, and optionally wherein the inner guide, the mid guide, and the outer guide are formed from a molding process or an additive manufacturing process.

14. The method of claim 10, 11, 12 or 13, and further comprising:
forming, from a second non-metallic material, an inlet duct (12), a plurality of swirl vanes (18), and an outlet duct (16);
disposing the plurality of swirl vanes within the inlet duct;
disposing the inlet duct upstream of the center body and the outlet duct downstream of the center body; and
joining and fluidly sealing the inlet duct and the outlet duct to the center body and optionally wherein the second non-metallic material is a composite material.

15. The method of claim 17, wherein the inlet duct, the plurality of swirl vanes, and the outlet duct are formed from a molding process or an additive manufacturing process, or wherein the inlet duct and the outlet duct are adhesively bonded to the center body.
